# EUROPEAN PATENT SPECIFICATION

(11) **EP 1 860 906 B1**
(45) Date of publication and mention of the grant of the patent: **20.10.2010**
(21) Application number: 06722045.9
(22) Date of filing: 14.03.2006
(51) Int. Cl.: H04W 12/06

(54) **A GENERAL AUTHENTICATION FORM AND A METHOD FOR IMPLEMENTING THE AUTHENTICATION**
EINE ALLGEMEINE AUTHENTIFIZIERUNGSFORM UND EIN VERFAHREN ZUR DURCHFÜHRUNG DER AUTHENTIFIZIERUNG
FORME D'AUTHENTIFICATION GENERALE ET PROCEDE POUR METTRE EN PLACE L'AUTHENTIFICATION

(30) Priority: 14.03.2005 CN 200510053868
(43) Date of publication of application: 28.11.2007
(73) Proprietor: Huawei Technologies Co., Ltd., Longgang District, Shenzhen Guangdong 518129 (CN)
(72) Inventor: HUANG, Yingxin, Huawei Administration Building, Guangdong (CN)
(74) Representative: Kreuz, Georg Maria
(86) International application number: PCT/CN2006/000390
(87) International publication number: WO 2006/097041

(56) References cited:
- WO-A-2004/084464
- WO-A-2004/084465
- CN-A- 1 466 308
- KR-A- 2002 014 593
- KR-A- 2004 058 412
- US-A1- 2003 097 593
- "Universal Mobile Telecommunications System (UMTS); Generic Authentication Architecture (GAA); Generic bootstrapping architecture (3GPP TS 33.220 version 6.3.0 Release 6); ETSI TS 133 220" ETSI STANDARDS, EUROPEAN TELECOMMUNICATIONS STANDARDS INSTITUTE, SOPHIA-ANTIPO, FR, vol. 3-SA3, no. V630, December 2004 (2004-12), XP014028221 ISSN: 0000-0001

## Description

### Field of the Invention

The present invention relates to authentication technologies in wireless communication system, and particularly, to a system for implementing a generic authentication, and to a method for implementing an authentication in the generic authentication architecture.

### Background of the Invention

In 3^{rd} generation wireless communication standards, the generic authentication architecture is used by various application services to verify user ID. The generic authentication architecture can be used to verify users of application services and verify the user ID. The application services include a multicast/broadcast service, a user certificate service, an instant message supplying service, or an agent service.

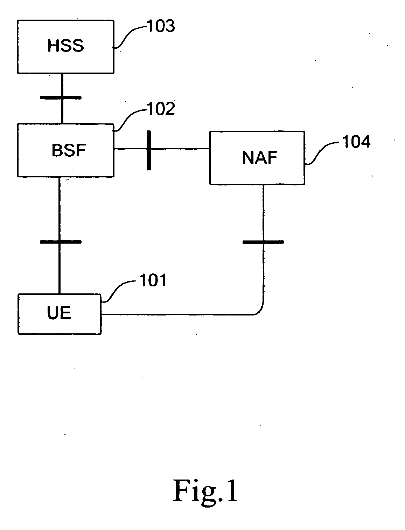

Fig.1 is a structure schematic diagram of the generic authentication architecture. The generic authentication architecture generally consists of a User Equipment (UE) 101, a Bootstrapping Server Function (BSF) 102 performing initial check and verification, a Home Subscriber Server (HSS) 103 and a Network Application Function (NAF) 104. The BSF 102 and UE 101 perform ID verification to each other, and simultaneously generate a key shared by the BSF 102 and the UE 101. The HSS 103 stores a Profile file describing user information, and the Profile file contains user ID and other descriptive information associated with the user, and the HSS 103 can also generate authentication vector information.

When a user needs to use a service, if the user knows that it is necessary to perform a mutual authentication with the BSF, the user interacts with the BSF directly for the mutual authentication; otherwise, the user contacts an NAF corresponding to the service firstly, and if the NAF uses the generic authentication architecture and the NAF needs the user to get an ID verification in the BSF, the NAF notifies the user of verifying user ID via the generic authentication architecture.

The detailed mutual authentication between the UE and the BSF is described as follows. The UE sends an authentication request containing a permanent user ID to the BSF. After receiving the authentication request from the UE, the BSF sends a request message containing the permanent user ID to request authentication information of user from the HSS. The HSS searches out a profile file of the user according to the permanent user ID, generates and returns the authentication information to the BSF. The BSF performs the mutual authentication to the UE with the Authentication and Key Agreement (AKA) according to the authentication information. After a successful mutual authentication is accomplished, the mutual authentication to the user ID is performed between the UE and BSF, and a share key Ks is generated simultaneously. Furthermore, the BSF defines a valid period for the Ks, makes an update of the Ks convenient. Afterward, the BSF allocates a Bootstrapping Transaction Identifier (B-TID) to the UE. Moreover, the BSF transfers the valid period of Ks to the UE while transferring the B-TID and Ks to the UE, in which the B-TID is associated with the Ks. The share key Ks served as a root key will not be deleted from the UE and BSF of the user. When the UE communicates with the NAF, a key derived from the Ks will be used to protect the communication.

When the user finds the Ks will be expired or the NAF instructs the user to be re-authenticated by the BSF, the user will perform the authentication to the BSF again by repeating the above processes, in order to get a new Ks and B-TID.

The authentication between the UE and the BSF is performed through an HTTP AKA protocol, which is a 3G-based authentication. Moreover, there is only one such authentication mechanism between the UE and the BSF. Along with the development of technologies, however, there may be other mechanisms for implementing the authentication between the UE and the BSF, for example Diffie-Hellman (DH) based authentication mechanism. Further, the generic authentication architecture may also provide services to a 2G user, but the authentication mechanism for 2G users is different from the authentication mechanism for 3G users. If there are more than one authentication mechanisms for users, it is necessary to negotiate about which authentication method to be implemented for the mutual authentication between the user and the network side.

Moreover, in the existing generic authentication architecture, the Application Server (AS) is unable to request a service from other servers as a user, and the AS is only able to provide the service to users; therefore, in the existing generic authentication architecture, only a common UE can request a service, and sometimes the UE can provide some simple services to other users, for example the UE can establish a simple website, but the UE can not provide other services to other users via the existing generic authentication architecture. As can be seen from the above, various resources of network may not be fully utilized under the existing generic authentication architecture.

ETSI TS 33.220, version 6.3.0, Release 6, 2004-12, generic Authentication Architecture; generic Bootstrapping Architecture, describes the security features and a mechanism to bootstrap authentication and key agreement for application security from the 3GPP AKA mechanism, in which the process of an EAC and a UE performing mutual authentication is described.

US 2003/0097593 provides a user terminal authentication program in which "an authentication method suitable for a user terminal from among a plurality of authentication methods" is selected.

### Summary of the Invention

The present invention provides a method for implementing an authentication in the generic authentication architecture, so as to negotiate an authentication mechanism with the network when a user performs the authentication by using the generic authentication architecture, and implement the authentication by using the authentication mechanism negotiated.

The present invention provides a generic authentication architecture which utilizes various resources of network adequately.

A method for implementing the authentication includes the following processes:
an Entity Authentication Centre, EAC, in a generic authentication architecture receives an authentication request from an entity sending the authentication request;
the EAC acquires authentication mechanisms supported by the entity sending the authentication request, and authentication mechanisms supported by an operator's network;
the EAC selects an authentication mechanism supported by both the operator's network and the entity sending the authentication request from the authentication mechanisms acquired; and
the EAC performs an authentication with the entity sending the authentication request by using the authentication mechanism selected;
the EAC allocates an authentication query ID for the entity if the entity provides services, wherein the authentication query ID is used for acquiring an authentication result of a second entity from EAC when the entity receives a service request from the second entity.

Preferably, the process of acquiring authentication mechanisms supported by the entity sending the authentication request includes:
the EAC acquires the authentication mechanisms supported by the entity sending the authentication request from the authentication request; or
the EAC sends a request message for providing the authentication mechanisms supported by the entity sending the authentication request to the entity sending the authentication request, and acquires the authentication mechanisms supported by the entity sending the authentication request from a response message returned by the entity sending the authentication request.

Preferably, the process of acquiring the authentication mechanisms supported by operator's network includes:
the EAC sends a message to an Entity Subscription Database ,ESD, wherein the message includes a request for authentication information with an ID of the entity sending the authentication request;
the ESD determines the authentication mechanisms supported by the operator's network;
the ESD sends a response message to the EAC ,wherein the response message includes the authentication mechanisms determined; and
the EAC acquires the authentication mechanisms supported by the operator's network from the response message;
or the process of acquiring the authentication mechanisms supported by the operator's network includes:
   the EAC acquires the authentication mechanisms supported by the operator's network from pre-stored information of the authentication mechanism supported by the operator's network.

Preferably, the process of determining the authentication mechanisms supported by operator's network includes:
the ESD determines all authentication mechanisms supported by the operator's network according to pre-configuration of the network, and takes the all authentication mechanisms determined as the authentication mechanisms supported by the operator's network;
   or the process of determining the authentication mechanisms supported by network includes:
   the ESD acquires the ID of the entity sending the authentication request from the message containing requesting authentication information, acquires subscription information of the entity sending the authentication request according to the ID of the entity sending the authentication request, acquires all authentication mechanisms supported by the entity sending the authentication request from the subscription information, determines all authentication mechanisms supported by the operator's network according to a pre-configuration of the operator's network, selects the authentication mechanism supported by both the operator's network and the entity sending the authentication request, takes all authentication mechanisms selected as the authentication mechanisms supported by the operator's network.

Preferably, the process of selecting an authentication mechanism supported by both the operator's network and the entity sending the authentication request from the authentication mechanisms acquired includes:
the EAC determines all authentication mechanisms supported by both the operator's network and the entity sending the authentication request, selects one authentication mechanism randomly from the all authentication mechanisms determined;
or the acquired authentication mechanism supported by the operator's network has priority information, and the process of selecting the authentication mechanism supported by both the operator's network and the entity sending the authentication request from the authentication mechanisms acquired includes:
   the EAC determines all authentication mechanisms supported by both the operator's network and the entity sending the authentication request; and selects the authentication mechanism with the highest priority from the all authentication mechanisms determined.

Preferably, the method further includes: the EAC pre-configures priority information of the authentication mechanisms, and selects the authentication mechanism with the highest priority from all authentication mechanisms determined, according to the priority information pre-configured.

Preferably, the ESD may be an HSS; the entity sending an authentication request may be a UE or an AS.

Preferably, when the entity sending the authentication request is the UE, the authentication request further includes terminal capability information of UE;
the method further includes: acquiring and storing the terminal capability information of UE in the authentication request; and
the EAC determines whether to convert format of a key generated after the authentication is successful, according to the terminal capability information of the UE, and determines whether the terminal capability information of the UE accords with the authentication mechanism used.

A system for implementing a generic authentication includes: an entity sending authentication request, configured to send an authentication request; an EAC, configured to receive the authentication request from the entity sending authentication request, acquire authentication mechanisms supported by the entity sending authentication request, and authentication mechanisms supported by an operator's network, select one authentication mechanism supported by the operator's network and the entity sending authentication request from the authentication mechanisms acquired; and perform an authentication with the entity sending authentication request via the authentication mechanism selected, allocate an authentication query ID for the entity if the entity provides services, wherein the authentication query ID is used for acquiring an authentication result of a second entity from EAC when the entity receives a service request from the second entity.

Preferably, the system further includes: an ESD connected to the EAC, configured to receive a message for requesting authentication information from the EAC, wherein the message includes ID of the entity sending the authentication request; acquire the authentication mechanisms supported by operator's network; and return the authentication mechanisms supported by operator's network to the EAC.

Preferably, the ESD is further configured to store subscription information of the entity sending authentication request, and provide authentication information of the entity sending authentication request to the EAC.

Preferably, the entity sending authentication request includes one of the following entities:
a first entity configured to use services, send the authentication request to the EAC;
and a third entity configured to use and provide services, send the authentication request to the EAC.

Preferably, the system further includes: an entity providing services, configured to establish a connection with the entity sending authentication request according to an authentication result acquired from the EAC, in order to provide services.

Preferably, the entity providing service includes one of the following entities: a second entity configured to provide services; and a third entity configured to use and provide services.

Preferably, the ESD comprises an HSS.

Preferably, the first entity includes a UE; the EAC includes a BSF; the third entity includes an AS or the UE.

Preferably, the second entity includes one of the following entities: a NAF and an AS.

An EAC implementing an authentication in a generic authentication architecture, includes: a first unit configured to receive an authentication request from an entity sending authentication request; a second unit configured to acquire authentication mechanisms supported by the entity sending the authentication request, and authentication mechanisms supported by an operator's network; a third unit configured to select one authentication mechanism supported by the operator's network and the entity sending the authentication request from the authentication mechanisms acquired; a forth unit, configured to perform an authentication with the entity sending the authentication request via the authentication mechanism selected, allocate an authentication query ID for the entity (205) if the entity (205) provides services, wherein the authentication query ID is used for acquiring an authentication result of a second entity (201) from EAC (202) when the entity (205) receives a service request from the second entity (201).

The method provided by the present invention for implementing the authentication is that, the EAC determines all authentication mechanisms supported by both the network and the entity initiating the authentication request according to the authentication mechanisms supported and provided by the entity initiating the authentication request and the authentication mechanisms supported and provided by the network, and select the authentication mechanism from the determined authentication mechanisms to perform the mutual authentication with the entity initiating the authentication request. With the method provided by the present invention, the procedure for selecting an authentication mechanism is added in the authentication, so that the generic authentication architecture may be widely applied; further, the coexistence of multiple authentication mechanisms will provide selections to the network configuration and network application of the operator.

With the generic authentication architecture provided by the present invention, the application server of operator's network not only provides services to common users, but also requests services from other servers, so that the resources of operator's network may be fully utilized.

### Brief Description of the Drawings

Fig.1 is a structure schematic diagram of the generic authentication architecture in the prior art.
Fig.2 is a structure schematic diagram of the generic authentication architecture in accordance with the present invention.
Fig.3 is a flowchart for implementing the authentication in accordance with an embodiment of the present invention.

### Detailed Description of the Invention

The technical solution of the present invention is described as follows in detail with reference to the accompanying drawings.

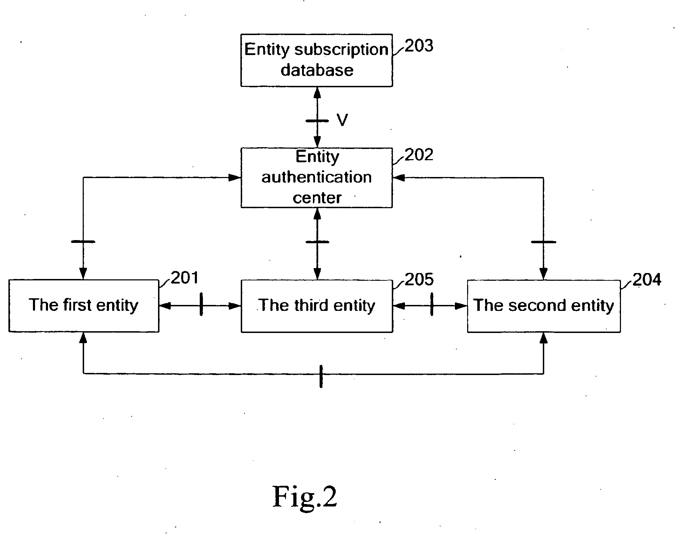

Fig.2 is a structure schematic diagram of the generic authentication architecture in accordance with the present invention. The generic authentication architecture of the present invention includes the first entity 201 configured to use services, the second entity 204 configured to provide services, an EAC 202, an ESD 203, and the third entity 205 configured to use and provide services.

Entity 201 is connected to EAC 202, entity 204 and entity 205 respectively. Entity 201 sends an authentication request to EAC 202, or sends a service request to the entity 204 or the entity 205.

EAC 202 is connected to ESD 203, entity 204 and entity 205 respectively. And EAC 202 receives an authentication request from entity 201 or entity 205, acquires the authentication mechanisms supported by operator's network and the authentication mechanisms supported by the entity sending the authentication request, selects an authentication mechanism supported by the operator's network and the entity sending the authentication request, and performs a mutual authentication with the entity sending the authentication request by using the authentication mechanism selected; alternatively, the EAC provides an authentication result to entity 204 or entity 205 according to authentication information provided by ESD 203.

ESD 203 stores subscription information of entity 201, entity 204 and entity 205, provides the authentication information of entity 201 or entity 205 to EAC 202; alternatively, ESD 203 provides the subscription information of entity 204 or entity 205 to EAC 202.

Entity 204 is connected to entity 205 directly, and establishes a connection with entity 201 or entity 205, according to the authentication result acquired from the EAC 202, so as to provide services.

Entity 205 sends the authentication request to EAC 202, performs the mutual authentication with the EAC 202 by using the authentication mechanism selected by EAC 202, and acquires a service request ID and an authentication query ID; alternatively, entity 205 sends the service request to entity 204 by using the service request ID, establishes the connection with entity 204 to use the service provided by entity 204; alternatively, entity 205 receives the service request from entity 201, acquires the authentication result of entity 201 from EAC 202 by using the authentication query ID, establishes the connection with entity 201, and provides services to entity 201.

The reason why entity 205 can use and provide services is that: after the authentication between entity 205 and EAC 202 is successful, EAC 202 acquires attributes of entity 205 from ESD 203, i.e. EAC 202 determines that entity 205 has subscribed ordering services and providing services, then, EAC 202 allocates the service request ID and the authentication query ID for entity 205. Therefore, when entity 205 needs to apply services of other servers, entity 205 can use the service request ID; when entity 205 provides services to a UE, entity 205 can use the authentication query ID, so that entity 205 can use services and provide services.

In general, entity 201 is the UE; entity 204 is an NAF or an AS; EAC 202 is a BSF; ESD 203 is an HSS; entity 205 is an AS or a UE. The process of entity 205 applying the service request ID and the authentication query ID is respectively same as the application of B-TID and ID of NAF in prior art, which will not be further described herein. Along with the development of technologies, the specific name of each entity as shown in Fig.2 may be changed, which will not be restricted herein as long as the function is the same as the function of each module shown in Fig.2.

A method for EAC 202 is described as follows in detail. In the method, EAC 202 acquires the authentication mechanisms supported by operator's network and the authentication mechanisms supported by the entity sending an authentication request, selects an authentication mechanism supported by both the operator's network and the entity sending the authentication request.

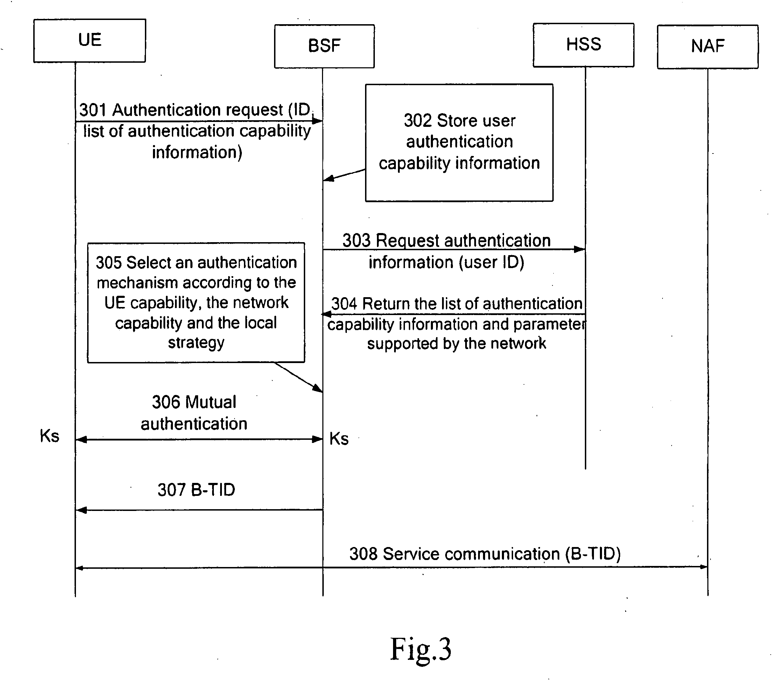

Fig.3 is a flowchart for implementing an authentication in accordance with an embodiment of the present invention. In this embodiment, the entity sending an authentication request is a UE; the EAC is a BSF; the NAF provides services to the UE; and the HSS serves as the ESD.

301: The UE sends an authentication request to the BSF; the authentication request includes user ID, capability information and a list of authentication capability information of UE.

The capability information of UE indicates whether the UE is 3G equipment or 2G equipment; the authentication capability information indicates the authentication mechanisms supported by the UE, and the authentication capability information can be identified in a simple field in practical applications. For example, a field of 4bit can be used to identify the authentication capability information; the value of 0001 means an AKA authentication; the value of 0010 means an SIM based authentication; the value of 0011 means an authentication for SIM and TLS; the value of 0100 means a DH authentication. So if the UE supports the AKA authentication and DH authentication, there are two items of 0001 and 0100 in the list of authentication capability information.

302: After receiving the authentication request sent by the UE, the BSF acquires and stores the capability information and the list of authentication capability information of UE.

If the authentication request message sent from the UE to the BSF contains no authentication capability information, the BSF may send a message for requesting the UE to provide the authentication mechanisms supported by the UE, and acquire the authentication mechanisms supported by the UE from the response message returned by the UE.

303: The BSF sends to the HSS a message for requesting the authentication information, and the message includes the user ID of UE.

304: The HSS acquires the authentication mechanisms supported by operator's network, and generates the authentication information of UE according to the acquired authentication mechanisms and the user ID of UE. Then the HSS returns the authentication information of UE and the authentication mechanisms supported by operator's network to the BSF.

The method for the HSS acquiring the authentication mechanisms supported by operator's network includes the following processes: the HSS acquires all authentication mechanisms supported by the UE from the subscription information of UE according to the user ID of UE; determines all authentication mechanisms supported by operator's network according to the pre-configuration of network side; selects the authentication mechanisms supported by both operator's network and the UE, takes the authentication mechanisms selected as the authentication mechanisms supported by the operator's network. Alternatively, the method for the HSS acquiring the authentication mechanisms supported by the operator's network includes the following processes: the HSS determines all authentication mechanisms supported by operator's network according to the pre-configuration of network side, and takes the authentication mechanisms determined as the authentication mechanisms supported by the operator's network.

In this embodiment, the authentication mechanisms supported by the operator's network, are returned from the HSS to the BSF, and exist in a list format. The list includes a parameter required by the authentication mechanism, (i.e. the authentication information) and the priority information. And in the list, the authentication mechanism with higher priority is located in front of the authentication mechanism with lower priority. Obviously, the authentication mechanisms supported by operator's network may also exist in other formats, and include no priority information.

305: The BSF selects an authentication mechanism supported by both operator's network and the current entity sending the authentication request, from the authentication mechanisms supported by both the operator's network and the authentication mechanisms supported by the UE.

If the authentication mechanisms supported by operator's network, returned by the HSS, contain no priority information, the BSF determines all authentication mechanisms supported by both operator's network and the UE, according to the authentication mechanisms supported by the operator's network and the authentication mechanisms supported by the UE. And the BSF selects an authentication mechanism randomly from the authentication mechanisms determined.

If the authentication mechanisms supported by operator's network, returned by the HSS, contain the priority information, the BSF determines all authentication mechanisms supported by both operator's network and the UE, according to the authentication mechanisms supported by operator's network and the authentication mechanisms supported by the UE. And the BSF selects the authentication mechanism with the highest priority from the authentication mechanisms determined. In other words, the BSF selects the authentication mechanism located at the forefront of the list of authentication mechanisms supported by operator's network.

If the priority information of different authentication mechanisms is pre-configured in the BSF, the BSF determines all authentication mechanisms supported by both operator's network and the UE, according to the authentication mechanisms supported by the operator's network and the authentication mechanisms supported by the UE. And the BSF selects an authentication mechanism with the highest priority from the authentication mechanisms determined according to the priority information pre-configured in the BSF. If there is no priority information of different authentication mechanisms re-configured in the BSF, the BSF determines the authentication mechanism according to the priority information contained by the authentication mechanisms supported by operator's network; if the authentication mechanisms supported by operator's network does not contain priority information either, the BSF selects the authentication mechanism randomly.

For example, the BSF has determined all authentication mechanisms supported by both operator's network and the UE are indicated by 0001 and 0100; if there is no authentication mechanism priority preset in the BSF and the BSF learns that the list of authentication mechanisms provided by the HSS includes the priority information, the BSF performs a selection according to an authentication mechanism located at the forefront of the authentication capability list provided by the network; if the network side locates the authentication mechanism indicated by 0001 at the forefront, the BSF selects the authentication mechanism indicated by 0001 as the authentication mechanism determined; if the BSF has configured authentication mechanism indicated by 0100 as the preferred authentication mechanism, the BSF selects the authentication mechanism indicated by 0100 as the authentication mechanism selected.

306: The BSF performs the authentication with the UE by using the authentication mechanism selected and the authentication information. After the authentication is successful, the BSF determines whether to convert a format of a key, according to terminal capability information of UE, and whether the authentication mechanism used accords with the terminal capability information. In other words, the BSF has the same key conversion capability as the UE.

For example, when the UE is a combination of SIM cards and cell phones with different capabilities, the BSF needs to convert the format of the key generated after the authentication. For example, the UE is a combination of a 2G SIM card and a 3G cell phone; after the authentication is performed by using the authentication mechanism indicated by 0010, the generated key is a key of 64bits; therefore, after receiving the key of 64bits, the 3G cell phone will convert the key of 64bits into a Cipher Key (CK) of 128bits and an Integrity Key (IK) of 128bits. At this point, the BSF also needs to convert the key of 64bits generated from the authentication into the key of 128bits, so as to share the key with the UE. The detailed conversion process is the same as the conversion process of 3G cell phone, which will not be described in detail.

If the BSF and the UE use the authentication mechanism indicated by 0010, and the BSF determines that the UE is a 3G cell phone according to the terminal capability information of UE, the BSF also needs to convert the key of 64bit into the key of 128bits, i.e., converts the key of 64bits into the format of a CK and an IK.

Other combinations of the SIM card and the cell phone, and the combination of cell phone and authentication mechanism, are similar to the abovementioned processes. To sum up, the BSF has the same key conversion capability as the key conversion capability of the UE, i.e. the method for the BSF determining whether to convert the key is the same as the method for UE.

307: The BSF allocates a B-TID for the UE.

308: The UE communicates with the NAF by using the B-TID.

The foregoing description is merely an embodiment of the present invention. The entity sending an authentication request may also be an AS in practical applications. If the entity sending an authentication request is an AS, in the process of 306, a key format conversion will be skipped. After the authentication is successful, the BSF directly allocates a service request ID, and an authentication query ID for the AS. The process of applying the service request ID and the authentication query ID are respectively the same as the application of B-TID and ID of NAF in prior art, which will not be described in detail.

Moreover, the BSF may also store the list of authentication mechanisms supported by operator's network, and exchange information with the HSS periodically for updating the list of authentication mechanisms. In this way, the HSS needs not to provide the list of authentication mechanisms supported by operator's network, when the HSS provides the authentication information every time. And the BSF may acquire the authentication mechanism supported by operator's network from the information stored in the BSF, and avoid the great deal of information repeatedly transported in the network.

According to the above embodiments of the present invention, the procedure for selecting an authentication mechanism is added in the authentication, so that the generic authentication architecture may be widely applied; further, the coexistence of multiple authentication mechanisms will provide selections to the network configuration and network application of the operator. With the generic authentication architecture provided by the embodiment of the present invention, the application server of operator's network not only provides services to common users, but also requests services from other servers, so that the resources of operator's network may be fully utilized.

To sum up, the above is only preferred embodiment of the present invention and is not used to limit the protection scope of the present invention.

## Claims

1. A method for implementing an authentication, comprising:
receiving, by an Entity Authentication Centre (202), EAC, in a generic authentication architecture an authentication request from an entity (201, 205, 204) sending the authentication request;
acquiring, by the EAC (202), authentication mechanisms supported by the entity (201, 205, 204) sending the authentication request, and authentication mechanisms supported by an operator's network;
selecting, by the EAC (202), an authentication mechanism supported by both the operator's network and the entity (201, 205, 204) sending the authentication request from the authentication mechanisms acquired; and
performing, by the EAC (202), an authentication with the entity (201, 205, 204) sending the authentication request by using the authentication mechanism selected; and
allocating, by the EAC (202), an authentication query ID for the entity (205, 201, 204) if the entity (205, 201, 204) provides services, wherein the authentication query ID is used for acquiring an authentication result of a second entity (201, 204, 205) from EAC (202) when the entity (205, 201, 204) receives a service request from the second entity (201, 204, 205).

2. The method of Claim 1, wherein acquiring the authentication mechanisms supported by the entity sending the authentication request comprises:
acquiring, by the EAC (202), the authentication mechanisms supported by the entity (201, 205, 204) sending the authentication request from the authentication request;
or
sending, by the EAC (202), a request message for providing the authentication mechanisms supported by the entity sending the authentication request to the entity sending the authentication request, and
acquiring the authentication mechanisms supported by the entity (201, 205, 204) sending the authentication request from a response message returned by the entity (201, 205, 204) sending the authentication request.

3. The method of Claim 1, wherein acquiring the authentication mechanisms supported by the operator's network comprises:
sending, by the EAC (202), a message to a Entity Subscription Database (203), ESD, wherein the message comprises a request for authentication information with an ID of the entity (201, 205, 204) sending the authentication request;
determining, by the ESD (203), the authentication mechanisms supported by the operator's network;
sending, by the ESD (203), a response message to the EAC (202) ,wherein the response message comprises the authentication mechanisms determined; and
acquiring, by the EAC (202), the authentication mechanisms supported by the operator's network from the response message;
or
acquiring, by the EAC (202), the authentication mechanisms supported by the operator's network from pre-stored information of the authentication mechanism supported by the operator's network.

4. The method of Claim 3, wherein determining the authentication mechanisms supported by the operator's network comprises:
determining, by the ESD (203), all authentication mechanisms supported by the operator's network according to pre-configuration of the network, and
taking the all authentication mechanisms determined as the authentication mechanisms supported by the operator's network;
or
acquiring, by the ESD (203), the ID of the entity (201, 205, 204) sending the authentication request from the message containing requesting authentication information;
acquiring subscription information of the entity (201, 205, 204) sending the authentication request according to the ID of the entity (201, 205, 204) sending the authentication request;
acquiring all authentication mechanisms supported by the entity (201, 205, 204) sending the authentication request from the subscription information;
determining all authentication mechanisms supported by the operator's network according to a pre-configuration of the operator's network;
selecting the authentication mechanism supported by both the operator's network and the entity (201, 205, 204) sending the authentication request; and
taking all authentication mechanisms selected as the authentication mechanisms supported by the operator's network.

5. The method of Claim 1, wherein selecting the authentication mechanism supported by both the operator's network and the entity (201, 205, 204) sending the authentication request from the authentication mechanisms acquired comprises:
determining, by the EAC (202), all authentication mechanisms supported by both the operator's network and the entity (201, 205, 204) sending the authentication request; and
selecting, by the EAC (202), one authentication mechanism randomly from the all authentication mechanisms determined;
or
wherein the acquired authentication mechanism supported by the operator's network has priority information, and the selecting the authentication mechanism supported by both the operator's network and the entity (201, 205, 204) sending the authentication request from the authentication mechanisms acquired comprises:
determining, by the EAC (202), all authentication mechanisms supported by both the operator's network and the entity (201, 205, 204) sending the authentication request; and
selecting, by the EAC (202), the authentication mechanism with the highest priority from the all authentication mechanisms determined.

6. The method of Claim 5, further comprising:
pre-configuring, by the EAC (202), priority information of the authentication mechanisms, and selecting the authentication mechanism with the highest priority from all authentication mechanisms determined, according to the priority information pre-configured.

7. The method of any one of Claims 1 to 6, wherein the entity (201, 205, 204) sending the authentication request comprise: a User Equipment, UE, or an Application Server, AS.

8. The method of Claims 3 or 4, wherein the ESD (203) comprises a Home Subscriber Server, HSS.

9. The method of Claim 7, wherein the entity (201, 205, 204) sending the authentication request is the UE, the authentication request further comprises: terminal capability information of the UE;
the method further comprising: acquiring and storing the terminal capability information of the UE; and
determining, by the EAC (202), whether to convert format of a key generated after the authentication is successful, according to the terminal capability information of the UE, and whether the terminal capability information of the UE accords with the authentication mechanism used.

10. A system for implementing a generic authentication, comprising:
an entity (201, 205, 204) sending an authentication request, configured to send an authentication request;
an Entity Authentication Center (202), EAC, configured to receive the authentication request from the entity (201, 205, 204) sending authentication request, acquire authentication mechanisms supported by the entity (201, 205, 204) sending authentication request, and authentication mechanisms supported by an operator's network, select one authentication mechanism supported by the operator's network and the entity (201, 205, 204) sending authentication request from the authentication mechanisms acquired; and perform an authentication with the entity (201, 205, 204) sending authentication request via the authentication mechanism selected, and
the EAC is further configured to allocate an authentication query ID for the entity (205, 201, 204) if the entity (205, 201, 204) provides services, wherein the authentication query ID is used for acquiring an authentication result of a second entity (201, 204, 205) from EAC (202) when the entity (205, 201, 204) receives a service request from the second entity (201, 204, 205).

11. The system of Claim 10, further comprising:
an Entity Subscription Database (203), ESD, connected to the EAC (202), configured to receive a message for requesting authentication information from the EAC (202), wherein the message includes ID of the entity (201, 205, 204) sending the authentication request; acquire the authentication mechanisms supported by the operator's network; and return the authentication mechanisms supported by operator's network to the EAC (202).

12. The system of Claim 11, wherein the ESD (203) is further configured to store subscription information of the entity (201, 205, 204) sending authentication request, and provide authentication information of the entity (201, 205, 204) sending authentication request to the EAC (202).

13. The system of any one of Claims 10 to 12, wherein the entity (201, 205, 204) sending authentication request comprises one of the following entities:
a first entity (201), configured to use services, send an authentication request to the EAC (202); and
a third entity (205), configured to use and provide services, send an authentication request to the EAC (202).

14. The system of Claim 10, further comprising:
an entity (205, 204) providing services, configured to establish a connection with the entity (201, 205) sending authentication request according to an authentication result acquired from the EAC (202), in order to provide services.

15. The system of Claim 14, wherein the entity (205, 204) providing service comprises one of the following entities:
a second entity (204), configured to provide services; and
a third entity (205), configured to use and provide services.

16. The system of Claim 11, wherein the ESD (203) comprises a Home Subscriber Server, HSS.

17. The system of Claim 13, wherein the first entity (201) comprises a User Equipment, UE;
the EAC (202) comprises a Bootstrapping Server Function, BSF;
the third entity (205) comprises an Application Server, AS or the UE.

18. The system of Claim 15, wherein the second entity (204) comprises one of the following entities: a Network Application Function, NAF, and an AS.

19. An Entity Authentication Center, EAC (202), for implementing an authentication in a generic authentication architecture, comprising:
a first unit, configured to receive an authentication request from an entity (201, 205, 204) sending authentication request;
a second unit, configured to acquire authentication mechanisms supported by the entity (201, 205, 204) sending the authentication request, and authentication mechanisms supported by an operator's network;
a third unit, configured to select one authentication mechanism supported by the operator's network and the entity (201, 205, 204) sending the authentication request from the authentication mechanisms acquired; and
a forth unit, configured to perform an authentication with the entity (201, 205, 204) sending the authentication request via the authentication mechanism selected, allocate an authentication query ID for the entity (205, 201, 204) if the entity (205, 201, 204) provides services, wherein the authentication query ID is used for acquiring an authentication result of a second entity (201, 204, 205) from EAC (202) when the entity (205, 201, 204) receives a service request from the second entity (201, 204, 205).

## Patentansprüche

1. Verfahren zur Durchführung einer Authentifizierung, umfassend:
Empfangen einer Authentifizierungsanforderung von einer die Authentifizierungsanforderung sendenden Entität (201, 205, 204) durch ein Entity Authentication Centre EAC (202), in einer generischen Authentifizierungsarchitektur;
Erfassen von von der die Authentifizierungsanforderung sendenden Entität (201, 205, 204) unterstützten Authentifizierungsmechanismen und von von einem Netz des Betreibers unterstützten Authentifizierungsmechanismen durch das EAC (202);
Wählen eines sowohl von dem Netz des Betreibers und der die Authentifizierungsanforderung sendenden Entität (201, 205, 204) unterstützten Authentifizierungsmechanismus aus den erfassten Anthentifizierungsmechanismen durch das EAC (202) und
Durchführen einer Authentifizierung durch das EAC (202) mit der die Authentifizierungsnnforderung sendenden Entität (201, 205, 204) unter Verwendung des ausgewählten Authentifizierungsmechanismus; und
Zuordnen einer Authentifizierungsanfrage-ID durch das EAC (202) für die Entität (205, 201, 204), falls die Entität (205, 201, 204) Dienste bereitstellt, wobei die Authentifizierungsanfrage-ID zum Erfassen eines Authentifizierungsergebnisses einer zweiten Entität (201, 204, 205) von dem EAC (202) verwendet wird, wenn die Entität (205, 201, 204) eine Dienstanforderung von der zweiten Entität (201, 204, 205) empfängt.

2. Verfahren nach Anspruch 1, wobei das Erfassen der von der die Authentifizierungsanforderung sendenden Entität unterstützten Authentifizierungsmechanismen Folgendes umfasst:
Erfassen der von der die Authentifizierungsanforderung sendenden Entität (201, 205, 204) unterstützten Authentifrzierungsmechanismen aus der Authenthifizierungsanforderung durch das EAC (202);
oder
Senden einer Anforderungsnachricht durch das EAC (202) zum Bereitstellen der von der die Authentifizierungsanforderung sendenden Entität unterstützten Authentifizierungsmechanismen an die die Authentifizierungsanforderung sendende Entität und
Erfassen der von der die Authentifizierungsanforderung sendenden Entität (201, 205, 204) unterstützten Authentifizierungsmechanismen aus einer von der die Authentifizierungsanforderung sendenden Entität (201, 205, 204) zurückgeschickten Antwortnachricht.

3. Verfahren nach Anspruch 1, wobei das Erfassen der durch das Netz des Betreibers unterstützten Authentifizierungsmechanismen Folgendes umfasst:
Senden einer Nachricht durch das EAC (202) an eine ESD (Entity Subscription Database) (203), wobei die Nachricht eine Anforderung von Authentifizierungsinformationen mit einer ID der die Authentifizierungsanforderung sendenden Entität (201, 205, 204) umfasst;
Bestimmen der durch das Netz des Betreibers unterstützen Authentifizierungsmechanismen durch die ESD (203);
Senden einer Antwortnachricht an das EAC (202) durch die ESD (203), wobei die Antwortnachricht die bestimmten Authentifizierungsmechanismen umfasst; und
Erfassen der von dem Netz des Betreibers unterstützten Authentifizierungsmechanismen durch das EAC (202) aus der Antwortnachricht;
oder
Erfassen der durch das Netz des Betreibers unterstützten Authentifizierungsmechanismen durch das EAC (202) aus vorgespeicherten Informationen des von dem Netz des Betreibers unterstützten Authentifizierungsmechanismus.

4. Verfahren nach Anspruch 3, wobei das Bestimmen der von dem Netz des Betreibers unterstützten Authentifizierungsmechanismen Folgendes umfasst:
Bestimmen aller von dem Netz des Betreibers unterstützten Authentifizierungsmechanismen durch die ESD (203) gemäß einer Vorkonfiguration des Netzes, und
Nehmen aller als die von dem Netz des Betreibers unterstützten Authentifizierungsmechanismen bestimmten Authentifizierungsmechanismen;
oder
Erfassen der ID der die Authentifizierungsanforderung sendenden Entität (201, 205, 204) durch die ESD (203) aus der anfordernde Authentifizierungsinformationen enthaltenden Nachricht;
Erfassen von Teilnahmeinformationen der die Authentiflzierungsanforderung sendenden Entität (201, 205, 204) gemäß der ID der die Authentifizierungsanforderung sendenden Entität (201, 205, 204);
Erfassen aller von der die Authentifizierungsanforderung sendenden Entität (201, 205, 204) unterstützten Authentifizierungsmechanismen aus den Teilnahmeinformationen;
Bestimmen aller von dem Netz des Betreibers unterstützten Authentifizierungsmechanismen gemäß einer Vorkonfiguration des Netzes des Betreibers;
Wählen des von dem Netz des Betreibers und der die Authentifizierungsanforderung sendenden Entität (201, 205, 204) unterstützten Authentifizierungsmechanismus; und
Nehmen aller als die von dem Netz des Betreibers unterstützten Authentifiziemngsmechanismen gewählten Authentifizierungsmechanismen.

5. Verfahren nach Anspruch 1, wobei das Wählen des sowohl von dem Netz des Betreibers als auch der die Authentifizierungsanforderung sendenden Entität (201, 205, 204) unterstützten Authentifizierungsmechanismus aus den erfassten Authentifizierungsmechanismen Folgendes umfasst:
Bestimmen aller sowohl von dem Netz des Betreibers als auch der die Authentifizierungsanforderung sendenden Entität (201, 205, 204) unterstützten Authentifizierungsmechanismen durch das EAC (202); und
zufälliges Wählen eines Anthentifizierungsmechanismus durch das EAC (202) aus allen bestimmten Authentifizierungsmechanismen,
oder
wobei der erfasste, von dem Netz des Betreibers unterstützte Authentifizierungsmechanismus Prioritätsinformationen aufweist und das Wählen des sowohl von dem Netz des Betreibers als auch der die Authentifizierungsanforderung sendenden Entität (201, 205, 204) unterstützten Authentifizierungsmechanismus aus den erfassten Authentifizierungsmechanismen Folgendes umfasst:
Bestimmen aller sowohl von dem Netz des Betreibers als auch der die Authentifizierungsanforderung sendenden Entität (201, 205, 204) unterstützten Authentifizierungsmechanismen durch das EAC (202); und
Wählen des Authentifizierungsmechanismus mit der höchsten Priorität aus allen bestimmten Authentifizierungsmechanismen durch das EAC (202).

6. Verfahren nach Anspruch 5, weiterhin umfassend:
Vorkonfigurieren von Prioritätsinformationen der Authentifizierungsmechanismen durch das EAC (202) und Wählen des Authentifizierungsmechanismus mit der höchsten Priorität aus allen bestimmten Authentifizierungsmechanismen gemäß den vorkonfigurierten Prioritätsinformationen.

7. Verfahren nach einem der Ansprüche 1 bis 6, wobei die die Authentifizierungsanforderung sendende Entität (201, 205, 204) Folgendes umfasst: ein Teilnehmergerät UE (User Equipment) oder einen Anwendungsserver AS (Application Server).

8. Verfahren nach Anspruch 3 oder 4, wobei die ESD (203) einen Home Subscriber Server HSS umfasst.

9. Verfahren nach Anspruch 7, wobei die die Authentifizierungsanforderung sendende Entität (201, 205, 204) das UE ist, wobei die Authentifizierungsanforderung weiterhin umfasst.: Endgerätfähigkeitsinformationen des UE;
wobei das Verfahren weiterhin Folgendes umfasst: Erfassen und Speichern der Endgerätfähigkeitsinformationen des UE; und
Bestimmen durch das EAC (202), ob das Format eines nach erfolgreicher Authentifizierung generierten Schlüssels konvertiert werden soll, gemäß den Endgerätfähigkeitsinformationen des UE, und ob die Endgerätfähigkeitsinformationen des UE mit dem verwendeten Authentifizierungsmechanismus übereinstimmen.

10. System zum Implementieren einer generischen Authentifizierung, umfassend:
eine eine Authentifizierungsanforderung sendende Entität (201, 205, 204), die konfiguriert ist, eine Authentifizierungsanforderung zu senden;
ein EAC (Entity Authentication Center) (202), das konfiguriert ist, die Authentifizierungsanforderung von der die Authentifizierungsanforderung sendenden Entität (201, 205, 204) zu empfangen, von der eine Authentifizierungsanforderung sendenden Entität (201, 205, 204) unterstützte Authentifizierungsmechamsmen und
von dem Netz eines Betreibers unterstützte Authentifzierungsmechanismen zu erfassen, einen von dem Netz des Betreibers und der die Authentifizierungsanforderung sendenden Entität (201, 205, 204) unterstützten Authentifzierungsmechanismus aus den erfassten Authentifizierungsmechanismen zu wählen und eine Authentifizierung mit der eine Authentifizierungsanforderung sendenden Entität (201, 205, 204) über den gewählten Authentifizierungsmechanismus auszuführen, und
wobei das EAC ist weiterhin konfiguriert, eine Authentifizierungsanfrage-ID für die Entität (205, 201, 204) zuzuordnen, falls die Entität (205, 201, 204) Dienste bereitstellt, wobei die Authentifizierungsanfrage-ID zum Erfassen eines Authentifizierungsergebnisses einer zweiten Entität (201, 204, 205) von einem EAC (202) verwendet wird, wenn die Entität (205, 201, 204) eine Dienstanforderung von der zweiten Entität (201, 204, 205) empfängt.

11. System nach Anspruch 10, weiterhin umfassend:
eine ESD (Entity Subscription Database) (203), an das EAC (202) angeschlossen, die konfiguriert ist, eine Nachricht zum Anfordern von Authentifizierungsinformationen von dem EAC (202) zu empfangen, wobei die Nachricht eine ID der die Authentifizierungsanforderung sendenden Entität (201, 205, 204) enthält; die von dem Netz des Betreibers unterstützten Authentifizierungsmechanismen zu erfassen; und die von dem Netz des Betreibers unterstützten Authentifizierungsmechanismen an das EAC (202) zurückzuschicken.

12. System nach Anspruch 11, wobei die ESD (203) weiterhin konfiguriert ist, Teilnahmeinformationen der eine Authentifizierungsanforderung sendenden Entität (201, 205, 204) zu speichern und Authentifizierungsinformationen der eine Authentifzierungsunforderung sendenden Entität (201, 205, 204) an das EAC (202) zu liefern.

13. System nach einem der Ansprüche 10 bis 12, wobei die eine Authentifizierungsanforderung sendende Entität (201, 205, 204) eine der folgenden Entitäten umfasst:
eine erste Entität (201), die konfiguriert ist, Dienste zu verwenden, eine Authentifizierungsanforderung an das EAC (202) zu senden; und
eine dritte Entität (205), die konfiguriert ist, Dienste zu verwenden und bereitzustellen, eine Authentifizierungsanforderung an das EAC (202) zu senden.

14. System nach Anspruch 10, weiterhin umfassend:
eine Dienste bereitstellende Entität (205, 204), die konfiguriert ist, eine Verbindung mit der eine Authentifizierungsanforderung sendenden Entität (201, 205) gemäß einem von dem EAC (202) erfassten Authentifizierungsergebnis herzustellen, um Dienste bereitzustellen.

15. System nach Anspruch 14, wobei die einen Dienst bereitstellende Entität (205, 204) eine der folgenden Entitäten umfasst:
eine zweite Entität (204), die konfiguriert ist, Dienste bereitzustellen; und
eine dritte Entität (205), die konfiguriert ist, Dienste zu verwenden und bereitzustellen.

16. System nach Anspruch 11, wobei die ESD (203) einen Home Subscriber Server HSS umfasst.

17. System nach Anspruch 13, wobei die erste Entität (201) ein Teilnehmergerät UE umfasst;
das EAC (202) eine Bootstrapping Server Function BSF umfasst;
die dritte Entität (205) einen Anwendungsserver AS oder das UE umfasst.

18. System nach Anspruch 15, wobei die zweite Entität (204) eine der folgenden Entitäten umfasst: eine Network Application Function NAF und einen AS.

19. Entity Authentication Center EAC (202) zum Implementieren einer Authentifizierung in einer generischen Authentifizierungsarchitektur, umfassend:
eine erste Einheit, die konfiguriert ist, eine Authentifizierungsanforderung von einer eine Authentifizierungsanforderung sendenden Entität (201, 205, 204) zu empfangen;
eine zweite Einheit, die konfiguriert ist, von der die Authentifizierungsanforderung sendenden Entität (201, 205, 204) unterstützte Authentifizierungsmechanismen und von dem Netz eines Betreibers unterstützte Authentifizierungsmechanismen zu erfassen;
eine dritte Einheit, die konfiguriert ist, einen von dem Netz des Betreibers und der die Authentifizierungsanforderung sendenden Entität (201, 205, 204) unterstützten Authentifizierungsmechanismus aus den erfassten Authentifizierungsmechanismen zu wählen; und
eine vierte Einheit, die konfiguriert ist, eine Authentifizierung mit der die Authentifizierungsanforderung sendenden Entität (201, 205, 204) über den gewählten Authentifizierungsmechanismus auszuführen, eine Authentifizierungsanfrage-ID für die Entität (205, 201, 204) zuzuordnen, falls die Entität (205, 201, 204) Dienste bereitstellt, wobei die Authentifizierungsanfrage-ID zum Erfassen eines Authentifizierungsergebnisses einer zweiten Entität (201, 204, 205) von einem EAC (202) verwendet wird, wenn die Entität (205, 201, 204) eine Dienstanforderung von der zweiten Entität (201, 204, 205) empfängt.

## Revendications

1. Procédé destiné à mettre en oeuvre une authentification, comportant les étapes consistant à :
faire recevoir, par un centre d'authentification d'entités (202), EAC, au sein d'une architecture d'authentification générique, une demande d'authentification provenant d'une entité (201, 205, 204) émettant la demande d'authentification ;
faire acquérir, par l'EAC (202), des mécanismes d'authentification pris en charge par l'entité (201, 205, 204) émettant la demande d'authentification, et des mécanismes d'authentification pris en charge par le réseau d'un opérateur ;
faire sélectionner, par l'EAC (202), un mécanisme d'authentification pris en charge à la fois par le réseau de l'opérateur et par l'entité (201, 205, 204) émettant la demande d'authentification parmi les mécanismes d'authentification acquis ; et
faire réaliser, par l'EAC (202), une authentification avec l'entité (201, 205, 204) émettant la demande d'authentification en utilisant le mécanisme d'authentification sélectionné ; et
faire attribuer, par l'EAC (202), un identifiant de requête d'authentification à l'entité (205, 201, 204) si l'entité (205, 201, 204) assure des services, l'identifiant de requête d'authentification étant utilisé pour acquérir un résultat d'authentification d'une deuxième entité (201, 204, 205) auprès de l'EAC (202) lorsque l'entité (205, 201, 204) reçoit une demande de service provenant de la deuxième entité (201, 204, 205).

2. Procédé selon la revendication 1, l'acquisition des mécanismes d'authentification pris en charge par l'entité émettant la demande d'authentification comportant les étapes consistant à :
faire acquérir, par l'EAC (202), les mécanismes d'authentification pris en charge par l'entité (201, 205, 204) émettant la demande d'authentification à partir de la demande d'authentification ;
ou à
faire émettre à l'entité émettant la demande d'authentification, par l'EAC (202), un message de demande de communication des mécanismes d'authentification pris en charge par l'entité émettant la demande d'authentification, et
acquérir les mécanismes d'authentification pris en charge par l'entité (201, 205, 204) émettant la demande d'authentification à partir d'un message de réponse renvoyé par l'entité (201, 205, 204) émettant la demande d'authentification.

3. Procédé selon la revendication 1, l'acquisition des mécanismes d'authentification pris en charge par le réseau de l'opérateur comportant les étapes consistant à :
faire émettre, par l'EAC (202), un message à une base de données d'abonnement des entités (203), ESD, le message comportant une demande d'informations d'authentification comprenant un identifiant de l'entité (201, 205, 204) émettant la demande d'authentification ;
faire déterminer, par l'ESD (203), les mécanismes d'authentification pris en charge par le réseau de l'opérateur ;
faire émettre, par l'ESD (203), un message de réponses à l'EAC (202), le message de réponse comportant les mécanismes d'authentification déterminés ; et
faire acquérir, par l'EAC (202), les mécanismes d'authentification pris en charge par le réseau de l'opérateur à partir du message de réponse ;
ou à
faire acquérir, par l'EAC (202), les mécanismes d'authentification pris en charge par le réseau de l'opérateur à partir d'informations pré-stockées relatives au mécanisme d'authentification pris en charge par le réseau de l'opérateur.

4. Procédé selon la revendication 3, la détermination des mécanismes d'authentification pris en charge par le réseau de l'opérateur comportant les étapes consistant à :
faire déterminer, par l'ESD (203), tous les mécanismes d'authentification pris en charge par le réseau de l'opérateur en fonction d'une pré-configuration du réseau, et
considérer tous les mécanismes d'authentification déterminés comme les mécanismes d'authentification pris en charge par le réseau de l'opérateur ;
ou à
faire acquérir, par l'ESD (203), l'identifiant de l'entité (201, 205, 204) émettant la demande d'authentification à partir du message contenant une demande d'informations d'authentification ;
acquérir des informations d'abonnement de l'entité (201, 205, 204) émettant la demande d'authentification en fonction de l'identifiant de l'entité (201, 205, 204) émettant la demande d'authentification;
acquérir tous les mécanismes d'authentification pris en charge par l'entité (201, 205, 204) émettant la demande d'authentification à partir des informations d'abonnement ;
déterminer tous les mécanismes d'authentification pris en charge par le réseau de l'opérateur en fonction d'une pré-configuration du réseau de l'opérateur ;
sélectionner le mécanisme d'authentification pris en charge à la fois par le réseau de l'opérateur et par l'entité (201, 205, 204) émettant la demande d'authentification ; et considérer tous les mécanismes d'authentification sélectionnés comme les mécanismes d'authentification pris en charge par le réseau de l'opérateur.

5. Procédé selon la revendication 1, la sélection du mécanisme d'authentification pris en charge à la fois par le réseau de l'opérateur et par l'entité (201, 205, 204) émettant la demande d'authentification parmi les mécanismes d'authentification acquis comportant les étapes consistant à :
faire déterminer, par l'EAC (202), tous les mécanismes d'authentification pris en charge à la fois par le réseau de l'opérateur et par l'entité (201, 205, 204) émettant la demande d'authentification ; et
faire sélectionner aléatoirement, par l'EAC (202), un mécanisme d'authentification parmi tous les mécanismes d'authentification déterminés ;
ou
le mécanisme d'authentification acquis pris en charge par le réseau de l'opérateur étant doté d'informations de priorité et la sélection du mécanisme d'authentification pris en charge à la fois par le réseau de l'opérateur et par l'entité (201, 205, 204) émettant la demande d'authentification parmi les mécanismes d'authentification acquis comportant les étapes consistant à :
faire déterminer, par l'EAC (202), tous les mécanismes d'authentification pris en charge à la fois par le réseau de l'opérateur et par l'entité (201, 205, 204) émettant la demande d'authentification; et
faire sélectionner, par l'EAC (202), le mécanisme d'authentification doté de la priorité la plus élevée parmi tous les mécanismes d'authentification déterminés.

6. Procédé selon la revendication 5, comportant en outre l'étape consistant à :
faire préconfigurer, par l'EAC (202), des informations de priorité des mécanismes d'authentification et sélectionner le mécanisme d'authentification doté de la priorité la plus élevée parmi tous les mécanismes d'authentification déterminés, en fonction des informations de priorité préconfigurées.

7. Procédé selon l'une quelconque des revendications 1 à 6, l'entité (201, 205, 204) émettant la demande d'authentification comportant : un équipement d'utilisateur, UE, ou un serveur d'applications, AS.

8. Procédé selon la revendication 3 ou 4, l'ESD (203) comportant un serveur d'abonné résidentiel, HSS.

9. Procédé selon la revendication 7, l'entité (201, 205, 204) émettant la demande d'authentification étant l'UE, la demande d'authentification comportant en outre : des informations de fonctionnalités de terminal de l'UE ;
le procédé comportant en outre les étapes consistant à: acquérir et stocker les informations de fonctionnalités de terminal de l'UE ; et à faire déterminer, par l'EAC (202), s'il y a lieu ou non de convertir le format d'une clé générée après que l'authentification a réussi, en fonction des informations de fonctionnalités de terminal de l'UE, et si les informations de fonctionnalités de terminal de l'UE concordent avec le mécanisme d'authentification utilisé.

10. Système destiné à mettre en oeuvre une authentification générique, comportant:
une entité (201, 205, 204) émettant une demande d'authentification, configurée pour émettre une demande d'authentification ;
un centre d'authentification d'entités (202), EAC, configuré pour recevoir la demande d'authentification provenant de l'entité (201, 205, 204) émettant une demande d'authentification, acquérir des mécanismes d'authentification pris en charge par l'entité (201, 205, 204) émettant une demande d'authentification, et des mécanismes d'authentification pris en charge par le réseau d'un opérateur, sélectionner un mécanisme d'authentification pris en charge par le réseau de l'opérateur et par l'entité (201, 205, 204) émettant une demande d'authentification parmi les mécanismes d'authentification acquis ; et réaliser une authentification avec l'entité (201, 205, 204) émettant une demande d'authentification via le mécanisme d'authentification sélectionné ; et
l'EAC étant en outre configuré pour attribuer un identifiant de requête d'authentification à l'entité (205, 201, 204) si l'entité (205, 201, 204) assure des services, l'identifiant de requête d'authentification étant utilisé pour acquérir un résultat d'authentification d'une deuxième entité (201, 204, 205) auprès de l'EAC (202) lorsque l'entité (205, 201, 204) reçoit une demande de service provenant de la deuxième entité (201, 204, 205).

11. Système selon la revendication 10, comportant en outre :
une base de données d'abonnement des entités (203), ESD, reliée à l'EAC (202), configurée pour recevoir un message de demande d'informations d'authentification provenant de l'EAC (202), le message comprenant un identifiant de l'entité (201, 205, 204) émettant la demande d'authentification; acquérir les mécanismes d'authentification pris en charge par le réseau de l'opérateur; et renvoyer à l'EAC (202) les mécanismes d'authentification pris en charge par le réseau de l'opérateur.

12. Système selon la revendication 11, l'ESD (203) étant en outre configuré pour stocker des informations d'abonnement de l'entité (201, 205, 204) émettant une demande d'authentification et pour communiquer à l'EAC (202) des informations d'authentification de l'entité (201, 205, 204) émettant une demande d'authentification.

13. Système selon l'une quelconque des revendications 10 à 12, l'entité (201, 205, 204) émettant une demande d'authentification comportant une des entités suivantes :
une première entité (201) configurée pour utiliser des services, émettre une demande d'authentification à l'EAC (202) ; et
une troisième entité (205) configurée pour utiliser et assurer des services, émettre une demande d'authentification à l'EAC (202).

14. Système selon la revendication 10, comportant en outre :
une entité (205, 204) assurant des services, configurée pour établir une connexion avec l'entité (201, 205) émettant une demande d'authentification en fonction d'un résultat d'authentification acquis auprès de l'EAC (202), afin d'assurer des services.

15. Système selon la revendication 14, l'entité (205, 204) assurant des services comportant une des entités suivantes :
une deuxième entité (204), configurée pour assurer des services ; et
une troisième entité (205), configurée pour utiliser et assurer des services.

16. Système selon la revendication 11, l'ESD (203) comportant un serveur d'abonné résidentiel, HSS.

17. Système selon la revendication 13, la première entité (201) comportant un équipement d'utilisateur, UE ;
l'EAC (202) comportant une fonction serveur d'amorçage, BSF ;
la troisième entité (205) comportant un serveur d'applications, AS, ou l'UE.

18. Système selon la revendication 15, la deuxième entité (204) comportant une des entités suivantes: une fonction d'application réseau, NAF, et un AS.

19. Centre d'authentification d'entités, EAC (202), destiné à mettre en oeuvre une authentification au sein d'une architecture d'authentification générique, comportant :
une première unité, configurée pour recevoir une demande d'authentification provenant d'une entité (201, 205, 204) émettant une demande d'authentification;
une deuxième unité, configurée pour acquérir des mécanismes d'authentification pris en charge par l'entité (201, 205, 204) émettant la demande d'authentification, et des mécanismes d'authentification pris en charge par le réseau d'un opérateur ;
une troisième unité, configurée pour sélectionner un mécanisme d'authentification pris en charge par le réseau de l'opérateur et par l'entité (201, 205, 204) émettant la demande d'authentification parmi les mécanismes d'authentification acquis ; et
une quatrième unité, configurée pour réaliser une authentification avec l'entité (201, 205, 204) émettant la demande d'authentification via le mécanisme d'authentification sélectionné, attribuer un identifiant de requête d'authentification à l'entité (205, 201, 204) si l'entité (205, 201, 204) assure des services, l'identifiant de requête d'authentification étant utilisé pour acquérir un résultat d'authentification d'une deuxième entité (201, 204, 205) auprès de l'EAC (202) lorsque l'entité (205, 201, 204) reçoit une demande de service provenant de la deuxième entité (201, 204, 205).
